# EUROPEAN PATENT SPECIFICATION

(11) **EP 4 244 100 B1**
(45) Date of publication and mention of the grant of the patent: **16.07.2025**
(21) Application number: 21805682.8
(22) Date of filing: 02.11.2021
(51) Int. Cl.: B60R 11/04, B60R 11/00

(54) **MULTI-MODALITY CORNER VEHICLE SENSOR MODULE**
MODULE DE DÉTECTION MULTIMODALE POUR COINS DES VÉHICULES
MULTIMODALITÄTS-FAHRZEUGECK-SENSORMODUL

(30) Priority: 10.11.2020 SE 2051313
(43) Date of publication of application: 20.09.2023
(73) Proprietor: Scania CV AB, 151 87 Södertälje (SE)
(72) Inventor: TENSELIUS, Daniel, 619 92 TROSA (SE); CLAEZON, Fredrich, 139 53 Värmdö (SE); JOHANSSON, Mattias, 117 61 Stockholm (SE); JOHANSSON, Erik, 619 91 Trosa (SE)
(74) Representative: Scania CV AB
(86) International application number: PCT/SE2021/051093
(87) International publication number: WO 2022/103314

(56) References cited:
- EP-A1- 3 605 136
- WO-A1-2019/215350
- WO-A1-2019/241510
- DE-A1- 102005 056 800
- US-A1- 2016 300 113
- US-A1- 2019 220 034
- US-A1- 2020 150 267

## Description

### Technical field

The present disclosure relates to corner-mounted sensor modules for vehicles comprising a multitude of sensor systems based on different types of sensors. In particular, the disclosure relates to a vehicle comprising two corner-mounted sensor modules.

### Background

An autonomous vehicle will need an extensive sensor architecture to provide 360 degrees of world perception and be able to handle all possible scenarios without human intervention. In addition, the sensor architecture needs to fulfil certain redundancy requirements if there is a failure in one or more sensors. Hence, a plurality of discrete sensor systems including substantial number of separate sensors of different types is typically required.

The amount of separate sensor systems brings complexity in many areas. For example, a multitude of installation positions for different types of sensors may lead to a complex analysis for field of view coverage and related tolerances. Furthermore, all the individual sensors of the discrete sensor systems need mounting points at the vehicle. All these mounting points require significant design efforts for evaluating mechanical simulations, thermal aspects, and legal requirements. In addition, the different sensor systems need individual cabling, for both power and communication interfaces. In fact, the needs for cable routing for all sensor systems may be significant, and usually scales with the number of installed sensor systems.

It must also be appreciated that due to the many different shapes of commercial vehicles the same sensor layout may not be feasible on different vehicle variants, which makes design and manufacturing even more complex and cumbersome.

Another aspect related to the sensor systems is calibration, as every sensor system typically needs a unique calibration for the actual precise location on the vehicle. In particular, calibration of the full vehicle with all sensor systems is complex, and the complexity scales with the number of installed sensors. Furthermore, the relative calibration between sensor systems is fragile due to the amount of unique mounting points and the distances between sensors. Due to the size of a heavy vehicle significant relative movement can occur which can invalidate the calibration and cause performance reduction or loss of functionality.

To solve the above identified needs several solutions have been proposed. For example, US20170315231 discloses a sensing system of a vehicle which includes a control and a mounting carrier that supports a plurality of sensor units. The mounting carrier is configured to be disposed at the vehicle so that the plurality of sensor units having respective fields of sensing exterior of the vehicle.

Document EP3605136A1 discloses a vehicle comprising several sensor modules.

However, to address needs related to vehicles with multiple sensor systems for use for example in autonomous driving, there is a need for improved sensor arrangements that facilitates coverage, design, manufacturing, and calibration.

### Summary

It is an object of the disclosure to alleviate at least some of the drawbacks with the prior art. Thus, it is an object of this disclosure to provide a sensor arrangement that facilitates design, manufacturing, and installation. It is a further objective to provide a sensor arrangement that provides a simplified way to achieve 360 degrees coverage with sufficient redundancy. Furthermore, it is an objective to provide one single sensor layout, which is valid for many different vehicle variants, including trucks and buses.

To meet these objectives, this disclosure proposes various techniques where sensor modules comprising different types of sensors and mounted at pre-defined installation points at the vehicle body. More specifically, sensor modules are mounted at two or more corners of the vehicle to provide 360 degrees of world perception.

The disclosure relates to a vehicle comprising a first and a second sensor module. The first and a second sensor modules each comprises a rigid structure, one or more first sensors of a first sensor type, one or more second sensors of a second sensor type and an attachment mechanism. The one or more first sensors are rigidly mounted at the rigid structure such that they provide a first composed horizontal field of view around the sensor module. The one or more second sensors are rigidly mounted at the rigid structure such that they provide a second composed horizontal field of view around the sensor module. A field of view of one sensor module is composed by the first and the second composed horizontal field of views of the sensor module. Furthermore, a sum of the field of views of the first and second sensor modules is at least 540 degrees. The attachment mechanism is configured to attach the rigid structure at the vehicle. One of the sensor modules is arranged at a front corner of the vehicle and the other sensor module is arranged at a rear corner at the opposite side of the vehicle such that a composed field of view of the two sensor modules covers 360 degrees in relation to a reference point at the vehicle. By arranging the sensor modules at two corners in this way, 360 degrees of world perception around the vehicle can be provided with only two sensors. Thereby, there is an improved possibility to share cables for interface and power. Also, easy access for maintenance and replacement is provided. The modularity also makes it possible for the sensors of different types to share cleaning and heat management solutions.

According to the invention, the field of view of one sensor module is an overlapping field of view covered by both the first composed horizontal field of view and the second composed horizontal field of view. Thereby, the sensor module can provide 360 degrees coverage for each sensor type.

In some embodiments, the field of view is, for each individual sensor module, between 240 and 300 degrees or between 260 and 280 degrees. Hence, the solution can be implemented on vehicles having different shapes (e.g. differently shaped corners) and still 360 degrees of world perception around the vehicle can be provided with both sensor types.

According to the invention, the vehicle comprises two long sides and two short sides and the attachment mechanism is arranged to position the first and second sensor modules at least partly outside an occlusion zone limited by extension lines of the long sides and the short sides. Thereby, free sight is obtained around the entire corner.

In some embodiments, the attachment mechanism is arranged to position the first and second sensor modules such that they have free sight around a corner of the vehicle at which the sensor module is mounted. In this way, complete world perception around the vehicle is achieved.

In some embodiments, the vehicle comprises a third sensor which is the same kind as the first and second sensors and mounted in the same way, but arranged at another corner of the vehicle such that a field of view of the third sensor module is overlapping the field of views of the first and second sensor modules. In other words, one or more additional sensor modules may be added to fulfil redundancy requirements.

In some embodiments, the one or more first sensors are mounted such that the one or more first sensors and the one or more second sensors of one sensor module have a common viewing angle that originate from a common axis. Thereby, sensor fusion is facilitated.

In some embodiments, the one or more first sensors and the one or more second sensors are rigidly mounted at predefined positions at the rigid structure with pre-defined accuracy. Rigid mounting implies lower calibration needs of the vehicle as the relative placement of sensor within a sensor module can be pre-calibrated. The higher rigidity the better precision may be achieved in relative pre-calibration of the sensors within a sensor module. This simplifies integration of the sensors on different vehicle variants. Also, the rigid design allows for good thermal and long-term characteristics, meaning the relative calibration will stay valid for a long time and cope well with external stress from vibration and shock. In addition, through the use of low tolerance manufacturing methods and rigid materials such as aluminium or similar, high precision can be reached for the relative positioning of the different sensors.

In some embodiments, the first and second sensors are mounted to the rigid structure in a rotation symmetric manner in a horizontal plane. With this mounting a symmetric view around the vehicle corner is provided.

In some embodiments, the distance between the first and second sensors within a sensor module is a fraction of a distance between two sensor modules. By positioning the sensors in close proximity, the sensors may share cabling and other sensor management solutions.

In some embodiments, the at least two sensor modules comprise a transparent cover arranged to cover the field of views of the first and second sensors. Thereby, one cleaning solution may be used for all the sensors of one module.

In some embodiments, the one or more first sensors are mounted such that it is positioned at least partly on top of the one or more second sensors. Thereby, a compact design may be achieved.

In some embodiments, the first and second sensor types comprises one or more of image sensors, a radar and a lidar. Hence, sensors using different sensor technologies may be fitted into one single sensor module.

In some embodiments, the attachment mechanism comprises a collapsible member arranged to position the sensor module in a retracted position inside the occlusion zone or in a protracted position outside the occlusion zone. Thereby, the sensor module may be protected while not in use.

### Brief description of the drawings

Fig. 1 illustrates a vehicle comprising a plurality of sensor modules.
Fig. 2 illustrates a vehicle comprising sensor modules seen from above.
Fig. 3 illustrates a corner of the vehicle in Fig. 2 in more detail.
Fig. 4a illustrates a conceptual view of a sensor module.
Figs. 4b-c illustrate field of views of the sensor module of Fig. 4a.
Fig. 4d illustrates a view of a sensor module according to some embodiments.
Fig. 5a-c illustrates sensors of different types that have a common viewing angle that originate from a common axis.

### Detailed description

This disclosure proposes a vehicle comprising corner-mounted sensor modules. The sensor modules comprise a rigid structure designed to hold sensors of different sensor systems in close proximity. A diagonal installation concept in the corners of the vehicle enables 360 degrees view with each sensor system using just two of the four corners. Furthermore, each of the corner sensor modules have a single well-defined attachment point at the vehicle, which simplifies installation on different vehicle variants.

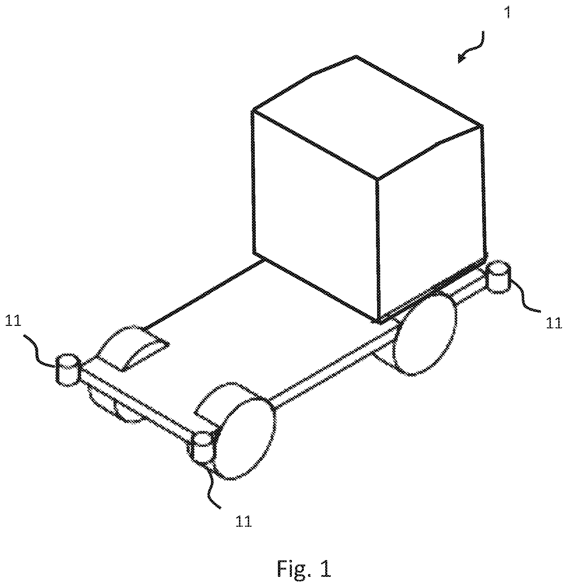

In the following disclosure, embodiments of a vehicle comprising corner mounted sensor modules will be explained with reference to the figures 1 to 5.

Fig. 1 conceptually illustrates a vehicle 1, here a truck, where the proposed technique may be implemented. The proposed technique is applicable to any vehicle implementing any type of perception for autonomous operation. Note that autonomous operation is herein not limited to fully autonomous operation, but also includes autonomous functions such as lane keeping and parking assistance.

The vehicle 1 comprises equipment required for autonomous driving, such as an autonomous driving system, a navigation system, sensors, actuators etc. The autonomous driving system is configured to operate the vehicle autonomously. The sensors and meters are configured to provide vehicle parameters for use by the autonomous driving system. The navigation system is configured to determine a curvature of an upcoming road. For simplicity, only parts of the vehicle 1 that are related to the proposed technique are illustrated in Fig. 1 and described herein.

The vehicle 1 illustrated in Fig. 1 comprises one sensor module 11 in each corner. The sensor modules 11 are configured for use in autonomous operation of the vehicle 1 and are sometimes referred to as an autonomy sensor suite. The autonomous sensors play an essential role in automated driving. For example, the autonomy sensor suite allows the vehicle to monitor its surroundings, detect oncoming obstacles, and safely plan its paths. In other words, the sensor modules 11 are configured for use in autonomous driving. For example, the sensor modules 11 are configured for use in object detection, ego-vehicle localisation or odometry during autonomous operation. In other words, the sensor modules 11 are for use in perceiving the vehicle's own position and movement as well as its surroundings during autonomous driving. The sensor modules 11 may comprise, but are not limited to, lidars or radars (suitable for distance measurements) and image sensors (suitable for angular measurements). For accurate use of the sensor modules 11, the poses (orientation and position) of the sensor modules 11 in the vehicle coordinate frame needs to be known. The vehicle coordinate frame is typically defined in relation to a reference point of the vehicle, such as the centre of the rear wheel axle.

The vehicle 1 illustrated in Fig. 1 comprises four sensor modules (one is not visible in Fig.1). However, with the proposed solution only two sensor modules are required to see 360 degrees around the vehicle 1, which will now be explained. In other words, this disclosure proposes a vehicle 1 comprising at least a first and a second sensor module 11.

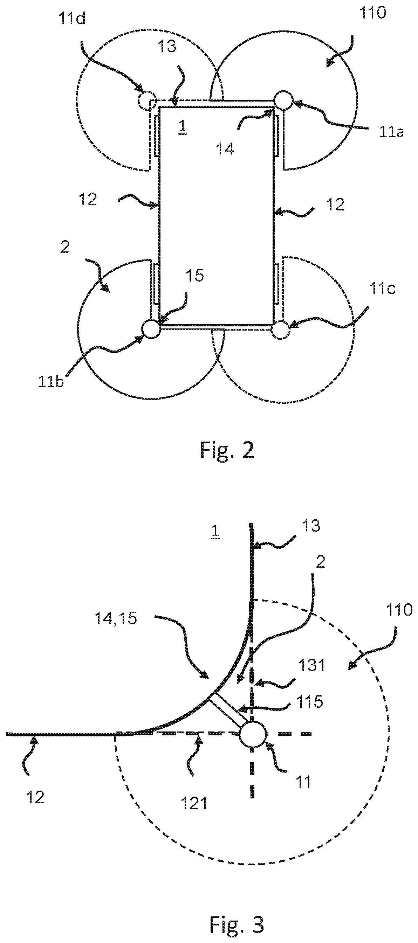

The concept will now first be described with reference to Fig 2. Fig. 2 illustrates the vehicle 1 seen from above. The vehicle comprises a first and second corner mounted sensor module 11 (denoted 11a, 11b). A third and a fourth sensor module 11c, 11d are illustrated with dashed lines, as those are optional for achieving 360 degrees world perception. The vehicle of Fig. 2 comprises two long sides 12 (or simply sides) and two short sides 13. The sensor modules 11a, 11b are mounted on opposite long sides 12 of the vehicle 1, one at a front corner 14 and one at a back corner 15. In other words, one of the sensor modules 11 (in Fig 2 denoted 11a) is arranged at a front corner 14 of the vehicle 1 and another sensor module 11 (in Fig 2 denoted 11b is arranged at a rear corner 15 at the opposite side 12 of the vehicle 1. In other words, the sensor modules 11 are diagonally installed on two corners of the vehicle body.

In the example of Fig. 2, all corners of the vehicle 1 are perpendicular (seen from above). In these embodiments, the first sensor modules 11a and the second sensor module 11b both have a horizontal field of view 110 (herein also referred to as simply field of view) of at least 270 degrees. Consequently, the sum of the (horizontal) field of views 110 of the first sensor module 11a and the second sensor module 11b is then at least 540 degrees. From Fig. 2 it is evident that this setting provides full visibility around the vehicle 1. In other words, the field of views of the two sensor modules 11a, 11b together cover 360 degrees in relation to a reference point at the vehicle 1. Stated differently, a composed field of view of the two sensor modules 11a, 11b covers 360 degrees in relation to a reference point at the vehicle 1. The reference point is for example the centre of the back axle or a geometric centre (origin) of the vehicle body.

However, depending on the shape of the vehicle body the required field of views of the individual sensor modules 11 may vary slightly as obstruction by the vehicle body may differ. For example, if the front corners are 85 degrees and the rear corners are 95 degrees, then the sensor module 11 at the front may need to have a first field of view of at least 285 degrees, while it may be sufficient that the one at the back has a first field of view of 255 degrees to cover 360 degrees around the vehicle body. In practice it is of course possible to use similar sensor modules (having 285 degrees field of view) in the back and in the front. However, the one in the back will still only be able to see 255 degrees around the vehicle corner as the rest of the field of view will be obstructed by the vehicle body. In other words, in some embodiments, the field of view of the sensor modules 11a, 11b may vary between 240 and 300 degrees or between 260 and 280 degrees. In any case, a sum of the field of views of the first and second sensor modules is at least 540 degrees.

Fig. 3 illustrates an example corner 14, 15 of the vehicle in Fig. 2 in more detail. The corner could be either a front corner 14 or rear corner 15. A sensor module 11 is attached (or mounted) to the corner 14, 15 of the vehicle 1 using an attachment mechanism 115. In this example, the attachment mechanism 115 is arranged to position the sensor module 11 at least partly outside an occlusion zone 2 limited by extension lines 121, 131 (dashed lines) of the long sides 12 and the short sides 13. In this way free sight is obtained also around a rounded corner. In other words, in some embodiments, the attachment mechanism 115 is arranged to position the first and second sensor modules 11 such that they have free sight around a corner of the vehicle 1 at which the sensor module is mounted. In this example this means that the sensor modules 11 are arranged so far out from the vehicle that an unobstructed field of view 110 (illustrated by the dashed line) of at least 270 degrees of sensor coverage around the vehicle 1 can be obtained with one sensor module.

For a wider corner, the free-sight angle may be smaller, for example 250 degrees. Hence, in some embodiments, the attachment mechanism 115 is arranged to position the first and second sensor modules 11 such that each sensor module has a field of view of at least 250 degrees around the reference point (e.g. origin) of the vehicle.

In the example of Fig. 2, 360 degrees coverage around the vehicle 1 is obtained by two sensor modules 11a, 11b. However, for redundancy, more sensor modules 11c may be used. For example, sensor modules may be positioned at all four corners of the vehicle 1. The redundancy obtained by overlapping coverage can then be used to improve quality. It may also be used as a back-up in case one or more sensors of any type brakes. In other words, in some embodiments, the vehicle 1 comprises a third sensor module 11c which is the same kind as the first and second sensors 11a, 11b and mounted in the same way, but arranged at another corner of the vehicle 1 such that a field of view of the third sensor module 11c is overlapping the field of views of the first and second sensor modules 11a, 11b.

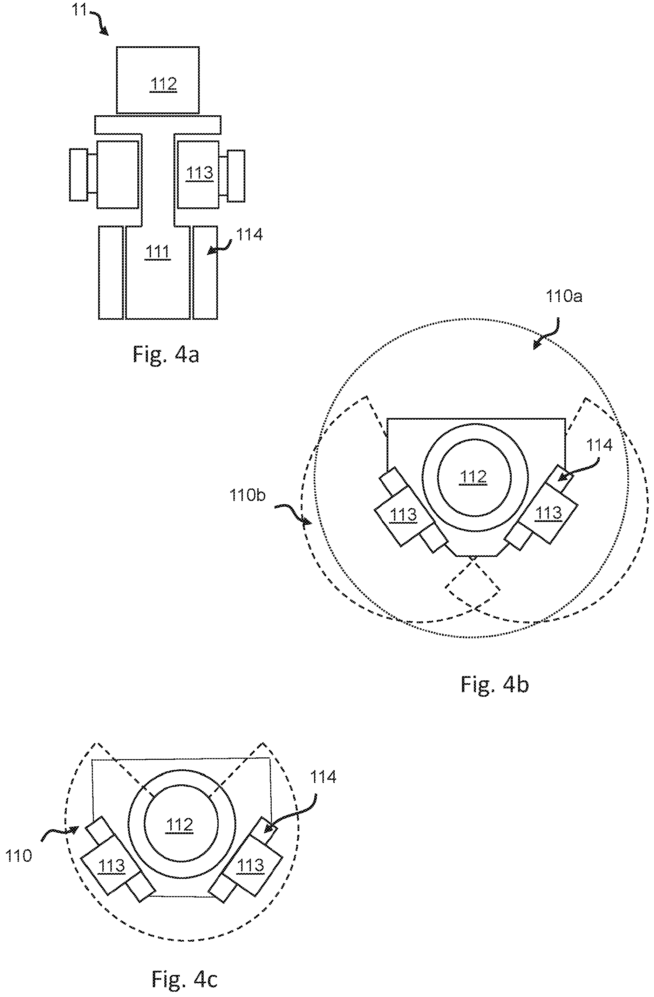

Fig. 4a illustrates a conceptual view of a sensor module 11. More specifically, Fig. 4a illustrates an intersection of a sensor module 11. The sensor module 11 comprises a rigid structure 111, and two or more sensors of different types. Thus, the horizontal field of view 110 of the sensor module 11, referred to in Fig. 2, is composed by the horizontal field of views of the individual sensors of the sensor module.

More specifically, the proposed sensor module 11 comprises one or more first sensors 112 of a first sensor type, one or more second sensors 113 of a second sensor type and an attachment mechanism 115. A sensor type herein refers to sensors using a certain sensor technology, such as lidar, radar or image sensing.

In the illustrated example, the sensor modules 11 comprises additional sensors, more specifically one or more third sensors 114 of a third sensor type. The sensor types comprise for example one or more of image sensors, a radar and a lidar. Required cabling (not shown) of the sensors 112, 113, 114 can, where possible be shared between the different systems, especially for power supply and interfaces utilizing with bus type communication (i.e. CAN, ethernet). For example, the one or more first sensors 112 may share cabling with the one or more second 113 and/or third sensors 114.

The field of view 110 of the sensor module is obtained using the first and second sensors (and third sensors if present). In other words, the field of view of the sensor module 11 is composed by field of views of the individual sensors 112, 113, 114 of the module 11 as will be further explained below.

The rigid structure 111 (or rigid frame) is made of a rigid material such as aluminium or other metal with similar properties. The rigid structure 111 typically has a design that allows for good thermal and long-term characteristics, meaning that a relative calibration of the rigid structure and the sensors 112, 113, 114 will stay valid for a long time and cope well with external stress from vibration and shock. In some embodiments the rigid structure 111 is made in one piece, i.e. it is a homogenous body. The rigid structure 111 may be a symmetric body, which facilitates a large field of view. In the illustrated example, the rigid structure 111 is a homogenous body with a circular base and a t-shaped intersection. More specifically, the rigid structure 111 is a solid of revolution. In the illustrated example, the middle part of the rigid structure 111 is excavated in order to provide space for the second sensors 113.

The one or more first sensors 112 of a first sensor type are rigidly mounted at the rigid structure 111. The one or more first sensors 112 are rigidly mounted such that they provide a composed horizontal field of view around the sensor module 11. Fig 4b illustrates the field of views of the individual sensor types of the sensor module 11. In the example of Fig. 4a, the first sensor 112 is illustrated as one single sensor having a large (360 degrees) field of view 110a (the dotted circle). For example, the first sensor 112 is a lidar having a cylindrical shape and a field of view 110a of 360 degrees in a horizontal plane around the first sensor 112. However, when the sensor module 11 is mounted at a corner of the vehicle 1 the field of view will be obstructed by the vehicle body. Hence, the perceived composed horizontal field of view of the first sensor in the example of Fig. 2 is still only 270 degrees.

The one or more second sensors 113 of a second sensor type are also rigidly mounted at the rigid structure 111. In the example of Fig. 4a, the second sensors 113 are illustrated as two sensors, more specifically two image sensors. In this example each image sensor has a field of view 110b of about 180 degrees (see Fig. 4b - dashed lines). The image sensors are arranged to have a total (or composed) field of view of about 270 degrees around the sensor module 11. The second field of view typically corresponds to at least a field of view which is unobstructed by the body of the vehicle 1, when the sensor module 11 is mounted at a corner of the vehicle 1. In the example of Fig. 2, this would be 270 degrees, but in other settings where the corners are not perpendicular a larger field of view may be required. Then one or more second sensors 113 may be added to the sensor module. In other words, the second sensors 113 provide a composed horizontal field of view around the sensor module.

As can be seen in Fig. 4b, the horizontal field of view of the second sensors 113 overlaps with the horizontal field of view of the one or more first sensors 112. However, in this case the field of views of the first and second sensors 112, 113 are not exactly the same. In other words, they only overlap partly. The field of view 110 of the sensor module 11 may then be defined as an overlapping field of view covered by both sensor types. This overlapping field of view 110 is illustrated in Fig. 4c. In other words, the field of view 110 of each individual sensor module is in some embodiments an overlapping field of view covered by both the first composed horizontal field of view 110a and the second composed horizontal field of view 110b. Alternatively, the field of view of the sensor module 11 may be defined as the field of view covered by at least one (or at least two or more) of the sensor types. This may be relevant if a multitude of different sensor systems are implemented in one sensor module 11, as it may not be necessary that all sensor types cover the entire field of view of the sensor module. In principle, the field of view of the sensor module 11 may be defined in different ways.

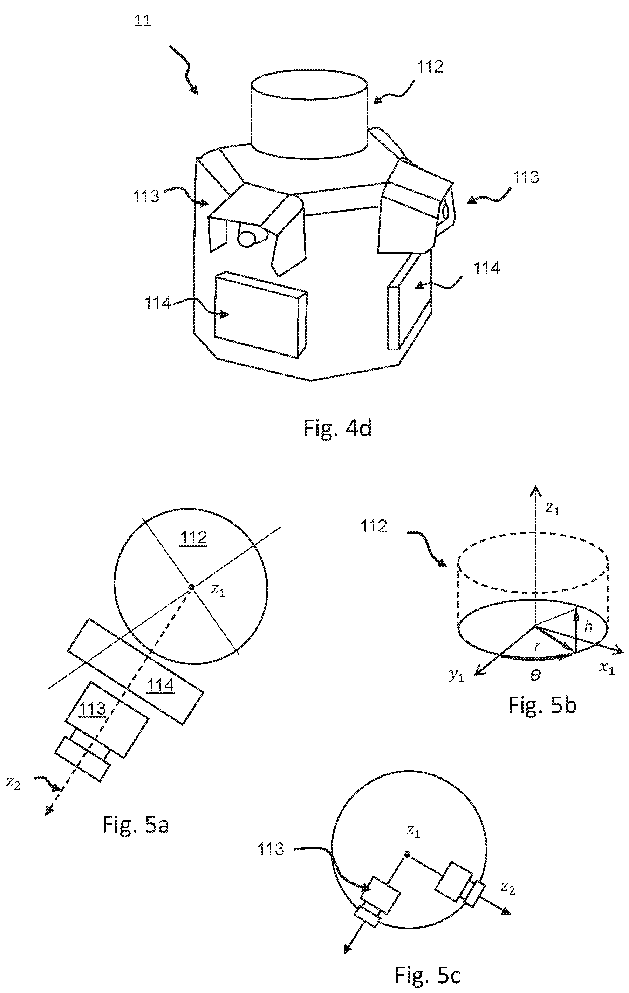

In the illustrated example, the sensor modules 11 also comprise one or more third sensors 114 of a third sensor type. The third sensors 114 provide a third composed horizontal field of view around the sensor module 11. The total field of view of the third sensors 114 which overlaps with the horizontal field of view of the one or more first and second sensors 113. In the example of Fig. 4, the third sensors 114 are illustrated as two sensors, more specifically two radars. The radars have a total composed field of view of about 270 degrees (not shown). The field of view corresponds to at least a field of view which is unobstructed by the body of the vehicle 1, when the sensor module 11 is mounted at a corner of the vehicle 1.

The attachment mechanism 115 is a mechanism configured to attach the rigid structure 111 at the vehicle 1. The construction of the attachment mechanism may differ depending on the vehicle type. In some embodiments, the attachment mechanism 115 comprises a collapsible member arranged to position the sensor module 11 in a retracted position or in a protracted position.

The rigid structure 111 designed to hold the different sensor systems in close proximity. In practice, the closer the sensors are mounted, the less the sensors 11 may move in relation to each other. Hence, the distance between the sensors is in some embodiments in the range of millimetres or at least a few centimetres. In some embodiments, the distance between the first and second sensors within a sensor module is a fraction of a distance between two sensor modules.

This may be achieved in different ways, depending on the format and sizes of the individual sensor types. One way is to pile the sensors on top of each other. In other words, in some embodiments, the one or more first sensors 112 is mounted such that it is positioned at least partly on top of the one or more second sensors 113.

Fig. 4d illustrates a sensor module 11 according to some embodiments. In this example, the sensor module is cylindric with a tapered top. The different sensors 112, 113, 114 are piled on top of each other, such that they are arranged in close proximity. The tapered top consists of a lidar (first sensor 112). Below the lidar two image sensors (second sensors 113) are arranged, such that they have a total composed field of view of about 270 degrees. Below the image sensors, radars (third sensors 114) are arranged. In this embodiment, the sensors are, as in Fig. 4a, mounted to the rigid structure in a rotation symmetric manner in a horizontal plane. Hence, the field of view is the same to the left as to the right. With such a design, the sensor modules are symmetric and can be placed in any corner of the vehicle 1.

In the sensor module of Fig. 4d the sensors 112, 113, 114 of a sensor module 11 are positioned such that the viewing angles of the first, second and third sensors have a common viewing angle that originate from a common axis (i.e. the rotation centre of the lidar). In this way the pixels of the sensors will end up at the same place in the respective coordinate systems of the sensors. In this way the parallax (displacement of an object viewed from different positions) may be eliminated. It is typically desirable to place the sensors in this way, as it facilitates joint interpretation of sensor data from the different sensors.

Fig. 5a conceptually illustrates a first sensor 112 (in this example the lidar), a second sensor 113 (in this example the image sensor) and a third sensor 114 (in this example the radar) that have the same viewing angle, here illustrated by the boresight of the image sensor (z-axis of the camera denoted *z*₂). The common viewing angle originates from a common axis *z*₁. With this sensor placement, the sensor data from the sensors 112, 113, 114 can be fused reliably for better target identification.

Fig. 5b illustrates a field of view of a lidar, and Fig. 5c illustrates the field of view seen from above. In these embodiments the first sensor 112 (in this example the lidar) has a cylindrical coordinate system (*x, y*₁, *z*₁, θ₁, *r*₁, *h*₁) where the *z*₁-axis passes through the centre of rotation of the lidar, see Fig. 5b. The field-of-view is defined as an angle *Θ*, which is covered by the lidar. For an omnidirectional lidar the angle is 360 degrees. In these example embodiments, the second and third sensors 113, 114 are positioned such that the extension of their "sight point" (z-axis of camera denoted *z*₂) intersects the *z*₁-axis of the lidar, as illustrated in Fig 5c.

For the second sensors 113 (image sensor) and the third sensors 114 (radar) this sensor placement implies that for each pair of second and third sensors (wherein two sensors placed on top of each other constitutes a pair) the optical axis (also referred to as the z-axis) are only displaced in height. More specifically, in this example each image sensor 113 has the same viewing angle as the radar 114 below. The z-axis (denoted *z*₂) is a line perpendicular to the plane containing the X and Y axis, which is conventionally defined as the plane facing the viewer. For example, for an image sensor the z-axis is the optical axis, i.e. a straight line that passes through the geometrical centre of a lens and joins the two centres of curvature of its surfaces. In some embodiments, the angle between two sensors of the same type is 90 degrees, which is an angle that simplifies transformation. It also makes the system more intuitive and therefore easier to calibrate. Note that the two sensors are typically mounted at different heights, but this can relatively easily be calibrated for.

In other words, some embodiments the one or more first sensors 112 are mounted such that the one or more first sensors 112 and the one or more second sensors 113 have a common viewing angle that originate from a common axis. In some embodiments the one or more third sensors 114 are also mounted such that they are also aligned (i.e. have a common viewing angle that originate from a common axis) with the one or more first and second sensors 112, 113.

When the sensor modules are manufactured, the sensors 112, 113, 114 are mounted at the rigid structure. It is typically desirable to do this with high accuracy. If the sensors are rigidly mounted at fixed predefined positions, such that their relative movement is negligible, then it may be calibrated as a unit after installation at the vehicle. In some embodiments, the one or more first sensors 112 and the one or more second sensors 113 are rigidly mounted at predefined positions at the rigid structure 111 with pre-defined accuracy.

For calibration, there are at least two options depending on the requirements. For normal calibration requirements the corner sensor module is only calibrated as a complete unit after vehicle installation. This can be done using any of the sensor systems on the module. Pre-calibration is then not needed as the sensor's positions are fixed and known from manufacturing.

For increased calibration requirements, the corner sensor module is pre-calibrated before vehicle installation, then additionally calibrated on the vehicle according to alt. 1.

It is also possible to provide the sensor modules with a cover. For example, a sheet of transparent glass or plastic could be wrapped around the sides of the cylinder-shaped sensor modules illustrated in Fig. 4a to 4d. The cover can then be mechanically cleaned by for example a wiper blade. In other words, in some embodiments, the at least two sensor modules comprise a transparent cover arranged to cover the field of views of the first and second sensors 112, 113.

The terminology used in the description of the embodiments as illustrated in the accompanying drawings is not intended to be limiting of the described method, control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

## Claims

1. A vehicle (1) comprising a first and a second sensor module (11) each comprising:
• a rigid structure (111),
• one or more first sensors (112) of a first sensor type, wherein the one or more first sensors (112) are rigidly mounted at the rigid structure (111) such that they provide a first composed horizontal field of view (110a) around the sensor module,
• one or more second sensors (113) of a second sensor type, wherein the one or more second sensors (113) are rigidly mounted at the rigid structure (111) such that they provide a second composed horizontal field (110b) of view around the sensor module, wherein a field of view (110) of the sensor module (11) is composed by the first and second composed horizontal field of views (110a, 110b),
• an attachment mechanism (115) configured to attach the rigid structure (111) at the vehicle (1),
**characterized by** that:
wherein the field of view (110) of one sensor module is an overlapping field of view covered by both the first composed horizontal field of view (110a) and the second composed horizontal field of view (110b)
wherein a sum of the field of views (110) of the first and second sensor modules (11a, 11b) is at least 540 degrees and wherein one of the sensor modules is arranged at a front corner (14) of the vehicle (1) and wherein the other sensor module (11) is arranged at a rear corner (15) at the opposite side of the vehicle (1) such that the field of views of the two sensor modules (11) together cover 360 degrees in relation to a reference point at the vehicle (1), and wherein the vehicle (1) comprises two long sides (12) and two short sides (13) and wherein the attachment mechanism (115) is arranged to position the first and second sensor modules (11) at least partly outside an occlusion zone (2) limited by extension lines (121, 131) of the long sides (12) and the short sides (13).25 .

2. The vehicle (1) of any of the preceding claims, wherein for each individual sensor module (11), the field of views (110) is between 240 and 300 degrees or between 260 and 280 degrees.

3. The vehicle (1) of any of the preceding claims, wherein the attachment mechanism (115) is arranged to position the first and second sensor modules (11) such that they have free sight around a corner of the vehicle (1) at which the sensor module is mounted.

4. The vehicle (1) of any of the preceding claims, comprising a third sensor which is the same kind as the first and second sensors and mounted in the same way, but arranged at another corner of the vehicle such that a field of view of the third sensor module is overlapping the field of views of the first and second sensor modules.

5. The vehicle (1) according to any of the preceding claims, wherein the one or more first sensors (112) is mounted such that the one or more first sensors (112) and the one or more second sensors (113) of one sensor module have a common viewing angle that originate from a common axis.

6. The vehicle (1) according to any of the preceding claims, wherein the one or more first sensors (112) and the one or more second sensors (113) are rigidly mounted at predefined positions at the rigid structure (111) with pre-defined accuracy.

7. The vehicle (1) according to any of the preceding claims, wherein the sensors are mounted to the rigid structure in a rotation symmetric manner in a horizontal plane.

8. The vehicle (1) according to any of the preceding claims, wherein the distance between the first and second sensors within a sensor module is a fraction of a distance between two sensor modules.

9. The vehicle (1) according to any of the preceding claims, where the at least two sensor modules comprises a transparent cover arranged to cover the field of views of the first and second sensors (112, 113).

10. The vehicle (1) according to any of the preceding claims, wherein the one or more first sensors (112) is mounted such that it is positioned at least partly on top of the one or more second sensors (113).

11. The vehicle (1) according to any of the preceding claims, wherein the first and second sensor types comprises one or more of image sensors, a radar and a lidar.

12. The vehicle (1) according to any of the preceding claims, wherein the attachment mechanism (115) comprises a collapsible member arranged to position the sensor module (11) in a retracted position inside the occlusion zone or in a protracted position outside the occlusion zone.

## Patentansprüche

1. Fahrzeug (1) umfassend ein erstes und ein zweites Sensormodul (11), jeweils umfassend:
• eine feste Struktur (111),
• einen oder mehrere erste Sensoren (112) einer ersten Sensorart, wobei ein oder mehrere Sensoren (112) fest an der festen Struktur (111) angebracht sind, sodass diese ein erstes, zusammengesetztes, horizontales Sichtfeld (110a) um das Sensormodul bereitstellen,
• einen oder mehrere zweite Sensoren (113) einer zweiten Sensorart, wobei ein oder mehrere zweite Sensoren (113) fest an der festen Struktur (111) angebracht sind, sodass sie ein zweites, zusammengesetztes, horizontales Sichtfeld (110b) um das Sensormodul bereitstellen, wobei ein Sichtfeld (110) des Sensormoduls (11) aus dem ersten und dem zweiten zusammengesetzten, horizontalen Sichtfeld (110a, 110b) zusammengesetzt wird,
• einen Anbringungsmechanismus (115), der dazu eingerichtet ist, die feste Struktur (111) am Fahrzeug (1) anzubringen,
**dadurch gekennzeichnet, dass**:
das Sichtfeld (110) des Sensormoduls ein überlappendes Sichtfeld ist, dass sowohl durch das erste, zusammengesetzte, horizontale Sichtfeld (110a) als auch das zweite zusammengesetzte, horizontale Sichtfeld (110b) abgedeckt wird,
wobei eine Summe der Sichtfelder (110) des ersten und des zweiten Sensormoduls (11a, 11b) wenigstens 540 Grad ist und wobei eines der Sensormodule an einer vorderen Ecke (14) des Fahrzeugs (1) angebracht ist und wobei das andere Sensormodul (11) an einer hinteren Ecke (15) an der gegenüberliegenden Seite des Fahrzeugs (1) angebracht ist, sodass die Sichtfelder der beiden Sensormodule (11) zusammen 360 Grad bezogen auf einen Referenzpunkt am Fahrzeug (1) abdecken und wobei das Fahrzeug (1) zwei lange Seiten (12) und zwei kurze Seiten (13) aufweist und wobei der Anbringungsmechanismus (115) dazu angeordnet ist, das erste und zweite Sensormodul (11) wenigstens teilweise außerhalb einer Okklusionszone (2) anzubringen, die durch die Fortsatzlinien (121, 131) der langen Seiten (12) und der kurzen Seiten (13) begrenzt wird.

2. Fahrzeug (1) nach einem der vorangehenden Ansprüche, wobei die Sichtfelder (110) jedes einzelnen Sensormoduls (11) zwischen 240 und 300 Grad oder zwischen 260 und 280 Grad liegen.

3. Fahrzeug (1) nach einem der vorangehenden Ansprüche, wobei der Anbringungsmechanismus (115) dazu angeordnet ist, das erste und das zweite Sensormodul (11) anzubringen, sodass diese freie Sicht um die Ecke des Fahrzeugs (1) haben, an dem das Sensormodul angebracht ist.

4. Fahrzeug (1) nach einem der vorangehenden Ansprüche, umfassend einen dritten Sensor derselben Art wie der erste und der zweite Sensor und der auf dieselbe Art angebracht ist, aber an einer anderen Ecke des Fahrzeugs angeordnet ist, sodass ein Sichtfeld des dritten Sensormoduls mit den Sichtfeldern des ersten und des zweiten Sensormoduls überlappt.

5. Fahrzeug (1) gemäß einem der vorangehenden Ansprüche, wobei ein oder mehrere ersten Sensoren (112) so angebracht sind, dass ein oder mehrere ersten Sensoren (112) und ein oder mehrere zweite Sensoren (113) eines Sensormoduls einen gemeinsamen Sichtwinkel haben, der von einer gemeinsamen Achse stammt.

6. Fahrzeug (1) gemäß einem der vorangehenden Ansprüche, wobei ein oder mehrere erste Sensoren (112) und ein oder mehrere zweite Sensoren (113) mit vorbestimmter Genauigkeit fest an vorbestimmten Positionen der festen Struktur (111) angebracht sind.

7. Fahrzeug (1) gemäß einem der vorangehenden Ansprüche, wobei die Sensoren rotationssymetrisch in einer horizontalen Ebene an der festen Struktur angebracht sind.

8. Fahrzeug (1) gemäß einem der vorangehenden Ansprüche, wobei die Entfernung zwischen dem ersten und dem zweiten Sensor innerhalb eines Sensormoduls ein Bruchteil der Entfernung zwischen zwei Sensormodulen ist.

9. Fahrzeug (1) gemäß einem der vorangehenden Ansprüche, wobei die wenigstens zwei Sensormodule eine transparente Abdeckung umfassen, die dazu angeordnet ist, die Sichtfelder des ersten und des zweiten Sensors (112, 113) abzudecken.

10. Fahrzeug (1) gemäß einem der vorangehenden Ansprüche, wobei ein oder mehrere erste Sensoren (112) so angebracht sind, dass sie wenigstens teilweise auf einem oder mehreren zweiten Sensoren (113) positioniert sind.

11. Fahrzeug (1) gemäß einem der vorangehenden Ansprüche, wobei die erste und die zweite Sensorart einen oder mehrere Bildsensoren, einen Radar und ein Lidar umfassen.

12. Fahrzeug (1) gemäß einem der vorangehenden Ansprüche, wobei der Anbringungsmechanismus (115) ein faltbares Element ist, das dazu angeordnet ist, das Sensormodul (11) in einer eingefahrenen Position innerhalb der Okklusionszone oder in einer ausgefahrenen Position außerhalb der Okklusionszone zu positionieren.

## Revendications

1. Véhicule (1) comprenant un premier et un deuxième module capteur (11) comprenant chacun :
• une structure rigide (111),
• un ou plusieurs premiers capteurs (112) d'un premier type de capteur, dans lequel un ou plusieurs premiers capteurs (112) sont montés de manière rigide au niveau de la structure rigide (111) de telle sorte qu'ils fournissent un premier champ de vision horizontal composé (110a) autour du module capteur,
• un ou plusieurs deuxièmes capteurs (113) d'un deuxième type de capteur, dans lequel les un ou plusieurs deuxièmes capteurs (113) sont montés de manière rigide au niveau de la structure rigide (111) de telle sorte qu'ils fournissent un deuxième champ de vision horizontal composé (110b) autour du module capteur, dans lequel un champ de vision (110) du module capteur (11) est composé par les premier et deuxième champs de visions horizontaux composés (110a, 110b),
• un mécanisme de fixation (115) configuré pour fixer la structure rigide (111) au niveau du véhicule (1),
**caractérisé en ce que** :
dans lequel le champ de vision (110) d'un module capteur est un champ de vision chevauchant couvert par à la fois le premier champ de vision horizontal composé (110a) et le deuxième champ de vision horizontal composé (110b)
dans lequel une somme des champs de visions (110) des premier et deuxième modules capteur (11a, 11b) est d'au moins 540 degrés et dans lequel l'un des modules capteur est agencé au niveau d'un coin avant (14) du véhicule (1) et dans lequel l'autre module capteur (11) est agencé au niveau d'un coin arrière (15) sur le côté opposé du véhicule (1) de telle sorte que les champs de visions des deux modules capteur (11) couvrent ensemble 360 degrés par rapport à un point de référence au niveau du véhicule (1), et dans lequel le véhicule (1) comprend deux côtés longs (12) et deux côtés courts (13) et dans lequel le mécanisme de fixation (115) est agencé pour positionner les premier et deuxième modules capteur (11) au moins partiellement à l'extérieur d'une zone d'occlusion (2) limitée par des lignes d'extension (121, 131) des côtés longs (12) et des côtés courts (13).25 .

2. Véhicule (1) selon l'une quelconque des revendications précédentes, dans lequel, pour chaque module capteur (11) individuel, le champ de visions (110) est compris entre 240 et 300 degrés ou entre 260 et 280 degrés.

3. Véhicule (1) selon l'une quelconque des revendications précédentes, dans lequel le mécanisme de fixation (115) est agencé pour positionner les premier et deuxième modules capteur (11) de telle sorte qu'ils aient une vue dégagée autour d'un coin du véhicule (1) au niveau duquel le module capteur est monté.

4. Véhicule (1) selon l'une quelconque des revendications précédentes, comprenant un troisième capteur qui est du même type que les premier et deuxième capteurs et monté de la même manière, mais agencé au niveau d'un autre coin du véhicule de telle sorte qu'un champ de vision du troisième module capteur chevauche les champs de visions des premier et deuxième modules capteur.

5. Véhicule (1) selon l'une quelconque des revendications précédentes, dans lequel les un ou plusieurs premiers capteurs (112) sont montés de telle sorte que les un ou plusieurs premiers capteurs (112) et les un ou plusieurs deuxièmes capteurs (113) d'un module capteurs ont un angle de vision commun qui provient d'un axe commun.

6. Véhicule (1) selon l'une quelconque des revendications précédentes, dans lequel les un ou plusieurs premiers capteurs (112) et les un ou plusieurs deuxièmes capteurs (113) sont montés de manière rigide au niveau de positions prédéfinies au niveau de la structure rigide (111) avec une précision prédéfinie.

7. Véhicule (1) selon l'une quelconque des revendications précédentes, dans lequel les capteurs sont montés sur la structure rigide d'une manière symétrique en rotation dans un plan horizontal.

8. Véhicule (1) selon l'une quelconque des revendications précédentes, dans lequel la distance entre les premier et deuxième capteurs au sein d'un module capteur est une fraction d'une distance entre deux modules capteur.

9. Véhicule (1) selon l'une quelconque des revendications précédentes, dans lequel les au moins deux modules capteur comprennent un couvercle transparent agencé pour couvrir les champs de visions des premier et deuxième capteurs (112, 113).

10. Véhicule (1) selon l'une quelconque des revendications précédentes, dans lequel les un ou plusieurs premiers capteurs (112) sont montés de telle sorte qu'ils sont positionnés au moins partiellement sur le sommet des un ou plusieurs deuxièmes capteurs (113).

11. Véhicule (1) selon l'une quelconque des revendications précédentes, dans lequel les premier et deuxième types de capteurs comprennent un ou plusieurs parmi des capteurs d'image, un radar et un lidar.

12. Véhicule (1) selon l'une quelconque des revendications précédentes, dans lequel le mécanisme de fixation (115) comprend un organe repliable agencé pour positionner le module capteur (11) dans une position rétractée à l'intérieur de la zone d'occlusion ou dans une position déployée à l'extérieur de la zone d'occlusion.
